# EUROPEAN PATENT APPLICATION

(11) **EP 2 362 594 A1**
(43) Date of publication of application: **31.08.2011**
(21) Application number: 11154762.6
(22) Date of filing: 17.02.2011
(51) Int. Cl.: H04L 12/58

(54) **Data storage method and mail relay method of storage system in mail system**

(30) Priority: 17.02.2010 JP 2010031939
(71) Applicant: Hitachi, Ltd., Chiyoda-ku Tokyo 100-8280 (JP)
(72) Inventor: Kinoshita, Masafumi, Tokyo 100-8220 (JP)
(74) Representative: MERH-IP Matias Erny Reichl Hoffmann

(57) **Abstract**

In a mail system, the present invention implements a mail gateway (106) that prevents data from being lost when a server fails and provides high delivery capability. In a mail system, the mail delivery performance of the mail gateway (106) is increased by the communication method and data storage method used between the mail gateway (106) and storage systems (107). More specifically, the mail gateway (106) and storage system (107) maintain a mail, which should be maintained by the mail gateway (106), in the volatile memory of the mail gateway (106) and storage system (107). The mail that may be lost by a failure and important data such as accounting information are written in the nonvolatile memory (309) of the storage system (107). In addition, the storage system (107) processes multiple accesses to the nonvolatile memory (309) at a time to speedily write data into the nonvolatile memory0 (309).

## Description

### BACKGROUND

The present invention relates to the technology of a mail server.

The widespread use of e-mail (hereinafter called mail) on a mobile phone requires the mail-service providing system (hereinafter called a mail system) of a company (hereinafter called a mobile communication carrier), which supplies communication services to mobile phones and mobile terminals (hereinafter called mobile phones), to process a large amount of mail. The following describes examples of the mail system of a mobile communication carrier.

A mobile communication carrier delivers mail by relaying the mail, received from a mobile phone or the Internet, to a destination and by converting the character code of the mail, an attached image, etc. The mobile communication carrier also charges the transmitting side or receiving side mobile phones for delivering the mail. The processing described above is implemented by a server device (hereinafter called a server) called a mail gateway installed in the mobile communication carrier.

Typically, the mail gateway performs the following processing for relaying one mail. First, the mail gateway receives a mail from the transmitting side mobile phone and records the information on the received mail in the volatile memory (memory requiring power to maintain the stored information) such as RAM (Random Access Memory) and in the nonvolatile memory (memory not requiring power to maintain the stored information) such as a magnetic disk or a flash memory based SSD (Solid State Drive) and returns a response to the transmitting side mobile phone to indicate that the mail has been received normally.

Next, the mail gateway relays the received mail to the mail transfer server (MTA: Message Transfer Agent) of the destination. If the mail is relayed successfully, the mail gateway deletes the mail information recorded in the volatile memory and the nonvolatile memory and terminates the processing. In general, a series of processing performed by the mail gateway described above for relaying mail is called Store&Forward.

If a server failure occurs during the mail relay processing of the mail gateway and the mail information recorded by the mail gateway in the volatile memory has been lost, the mail gateway copies the mail information recorded in the nonvolatile memory, into the volatile memory and continues the processing. That is, the mail gateway records the received mail once in the nonvolatile memory to prevent mail from being lost during the mail relay processing.

However, because the access to the nonvolatile memory is slower than the access to the volatile memory, the mail gateway that performs the relay processing described above becomes a bottleneck in the access to the nonvolatile memory. That is, the number of mails processable by the mail gateway per second (hereinafter called mail delivery performance) is decreased by the access to the nonvolatile memory.

To speed up the access to the nonvolatile memory, there is a method for using a SAN (Storage Area Network)-coupled high-speed storage for the nonvolatile memory device of the mail gateway. However, this method has problems with the scalability, the cost, and the operation.

### SUMMARY

A recent increase in the number of mails transmitted and received by each user and an increase in the mail size would lead to a potential increase in the traffic. In view of this background, the problem to be solved is to increase the mail delivery performance of a mail gateway.

To improve the mail delivery performance of a mail gateway, there are the following two techniques.
- To reduce, or increase the speed of, access to the non-volatile memory that is a bottleneck (hereinafter called the access performance improvement technique); and
- To scale out the nonvolatile memory and the mail gateway (the number of units is increased to improve performance) to improve the overall performance (hereinafter called the scale improvement technique).

To implement the access performance improvement technique, there is a method that the mail gateway records a received mail, not in the nonvolatile memory, but in the volatile memory. In general, the technology described above is a technology called a distributed in-memory cache, a distributed in-memory data grid, or an in-memory key-value store (For the scale improvement method, a scalability problem is generated if the general distributed in-memory cache is applied to the mail gateway, and, therefore, the scale improvement method is not considered here).

In the method described above, one possible method for preventing mail from being lost due to a server failure in the mail gateway is to install a mail-recording server device (hereinafter called a storage system) other than the mail gateway to allow mail to be recorded not only in the volatile memory of the gateway server but also in the volatile memory of the storage system. This configuration allows the mail gateway to prevent the loss of mail during the relay processing unless a server failure occurs in the mail gateway and in the storage system at the same time.

However, in this method, a mail may be lost if a power supply failure occurs at the site where the mail gateway and the storage system are installed. In addition, if the mail gateway fails to relay the mail to the mail transfer server, the mail gateway must maintain the mail for several hours or several days until the relay-failed mail is relayed successfully. Therefore, during this period, a server failure is more likely to occur in the mail gateway and in the storage system at the same time.

Another method for solving the problem described above is the method disclosed in JP-A-08-263348. This method uses the access performance improvement technique. According to the technology disclosed in JP-A-08-263348, the attribute information, which indicates whether data is to be stored in the volatile memory or in the non-volatile memory, is assigned in advance to each data. At the operation start time, the storage system checks all data stored in the nonvolatile memory according to the attribute information and copies data to be stored in the volatile memory to the volatile memory. When an application specifies data to be accessed, the storage system judges if the data is in the volatile memory or in the nonvolatile memory and accesses the volatile memory or the nonvolatile memory.

This method, if applied to a mail gateway, allows the mail gateway to record data, which must be maintained for a long time (for example, relay-failed mail), in the nonvolatile memory, and other mail in the volatile memory, thus decreasing access to the nonvolatile memory. However, the method disclosed in JP-A-08-263348 assumes that the attribute information, which indicates whether data is to be stored in the volatile memory or in the nonvolatile memory, is added to the data maintained in advance in the storage system. Therefore, this method is not well suited for the processing of a server, such as a mail gateway, where Store&Forward is performed because almost all stored data is new data.

In addition, JP-A-08-263348 does not consider the scale improvement method. For example, to use the method disclosed in JP-A-08-263348 and scaling-out at the same time, the mechanism is required to solve problems of how data stored in the storage system is distributed for scaling out and how a mail gateway knows which data is stored in which storage system. JP-A-08-263348 does not disclose this mechanism.

In addition, although there are the problems described above in the examples of a mail system, there are the same problems in the system of a service supplier that supplies products and services to communication terminals. A service supplier device manages the information on the mobile phone users in the RDB (Relational DataBase), etc. for supplying products and services, and processes the above user information on the web server for supplying services. Because RDB data is stored in the SAN-coupled storage, etc., the problem is that the access to the nonvolatile memory is the bottleneck and that scaling-out is difficult. To allow a service supplier device to supply services to more communication terminals, both the access performance improvement technique and the scale improvement technique must be used as with a mail system.

This specification discloses a technology for increasing the mail delivery performance of a mail gateway, in a mail system where a mail gateway and one or more storage systems are installed, by means of the communication method and the data storage method used between the mail gateway and the storage systems. More specifically, the following two types of processing are disclosed as the access performance improvement technique and the scaling improvement technique, respectively.
- To decrease the possibility of data loss during the mail relay processing, the mail gateway and the storage system record potentially long-term maintained data and important data in both the volatile memory and the nonvolatile memory, and record other data, not in the nonvolatile memory, but in the volatile memories of multiple servers, thus decreasing the number of accesses to the nonvolatile memory. In addition, multiple accesses to the nonvolatile memory may be processed at a time to speedily access the nonvolatile memory.
- To implement the scalability of the mail gateway and the storage system, the mail gateway is made to correspond to the queue maintain in the storage system to allow the storage system to perform the alive-monitoring processing and the failure-time processing for the corresponding mail gateway.

The disclosed mail system comprises a mail gateway and a storage system comprising a volatile memory and/or a nonvolatile memory, and the mail gateway and the storage system work together to build a configuration in which data can be maintained doubly or even more.

The types of data processed by the mail gateway includes a mail, accounting information, and information shared among mail gateways such as information on spam mails that should be rejected. The mail gateway checks the data type, mail relay processing state, and mail relay result to determine whether to write data into both the nonvolatile memory and the volatile memory, or into the volatile memory but not into the nonvolatile memory. For example, the mail gateway writes data, not into the nonvolatile memory but into the volatile memory in the case of the mail which could not be transmitted to the mail transfer server, a temporary error received from the mail transfer server, important data such as accounting information, etc. And, during the mail relay processing, the mail gateway issues a request to write the same data into the nonvolatile memory and the volatile memory, or a request specifying the volatile memory, not the nonvolatile memory as the write destination, to the storage system which performs the processing according to the received request.

Further, the storage system has a function to copy data, which is not in the nonvolatile memory but in the volatile memory, to the nonvolatile memory, and to notify the mail gateway, even if no request is received from the mail gateway. At this time, the storage system may write multiple data into the nonvolatile memory at a time to speedily write data into the nonvolatile memory.

The storage system stores the received data in the queue making it correspond to the source mail gateway. The queue is in the volatile memory and, when the nonvolatile memory is used, in the nonvolatile memory as a backup. The storage system receives the information, transmitted by the mail gateway at a startup time (or at a restart time after a failure), to establish the correspondence between the mail gateway and the queue. The storage system uses the information in the queue to control access to the data stored in the queue, to transmit an update notification when the data stored in the queue is updated, to monitor if the mail gateway corresponding to the queue is alive, or to perform the failure processing for the mail gateway.

In one specific aspect, a mail system comprises a mail server that receives a mail from a mail transmission device; and a storage system that stores the mail and/or related information on the mail wherein
the mail server comprises a function to generate the related information on the mail; a function to generate control information on storage of the mail and/or the related information; and/or a function to transmit the mail and/or the related information and the control information to the storage system, and/or
the storage system comprises a nonvolatile memory and/or a volatile memory used for the storage; a DataNode program that determines a method for the storage of the mail and/or the related information based on the control information, and/or that stores the mail and/or the related information in the nonvolatile memory and/or the volatile memory according to the determined method for the storage.

In addition, in the mail system described above, the function to generate the related information, which is performed by the mail server, may be configured to generate control information specifying whether to require the mail and/or the related information to be written into both the nonvolatile memory and the volatile memory, or into one of the nonvolatile memory and the volatile memory but not into the other, and the DataNode program of the storage system may be configured to store the mail and/or the related information according to the control information.

According to the teaching herein, a mail system that prevents data from being lost when a server failure occurs and provides high mail delivery performance can be implemented.

In addition, according to the teaching herein, the scalability of a mail system can be ensured.

These and other benefits are described throughout the present specification. A further understanding of the nature and advantages of the invention may be realized by reference to the remaining portions of the specification and the attached drawings.

### BRIEF DESCRIPTION OF THE DRAWINGS

FIG. 1 is a diagram showing an example of the system configuration of a first embodiment.
FIG. 2 is a diagram showing an example of the configuration of a mail gateway 106 to which the embodiments are applied.
FIG. 3A is a diagram showing an example of the configuration of a storage system 107 to which the embodiments are applied.
FIG. 3B is a diagram showing an example of the configuration of a storage system program 304 to which the embodiments are applied.
FIG. 3C is a diagram showing an example of the configuration of a volatile storage unit 305 and a nonvolatile storage unit 308 to which the embodiments are applied.
FIG. 4 is a diagram showing an example of the content of stored data and a stored response.
FIG. 5 is a diagram showing an example of the mail relay sequence of the mail gateway 106.
FIG. 6 is a diagram showing an example of the mail relay sequence of the mail gateway 106 when mail cannot be transmitted to a mail transfer server 105.
FIG. 7 is a diagram showing an example of the sequence in which multiple mail gateways 106 reference information stored in the storage system 107.
FIG. 8 is a diagram showing an example of the start sequence and the alive-confirmation sequence of the mail gateway 106.
FIG. 9 is a diagram showing an example of the failure and restoration sequence of the mail gateway 106.
FIG. 10 is a diagram showing an example of the data storage processing flow of the storage system 107.
FIG. 11 is a diagram showing an example of the data storage processing flow of the storage system 107.
FIG. 12 is a diagram showing an example of the system configuration of a second embodiment.
FIG. 13 is a diagram showing an example of the system configuration of a third embodiment.
FIG. 14 is a diagram showing an example of the sequence of the system in the third embodiment.

### DETAILED DESCRIPTION OF THE EMBODIMENTS

Embodiments of the present invention will be described below with reference to the drawings.

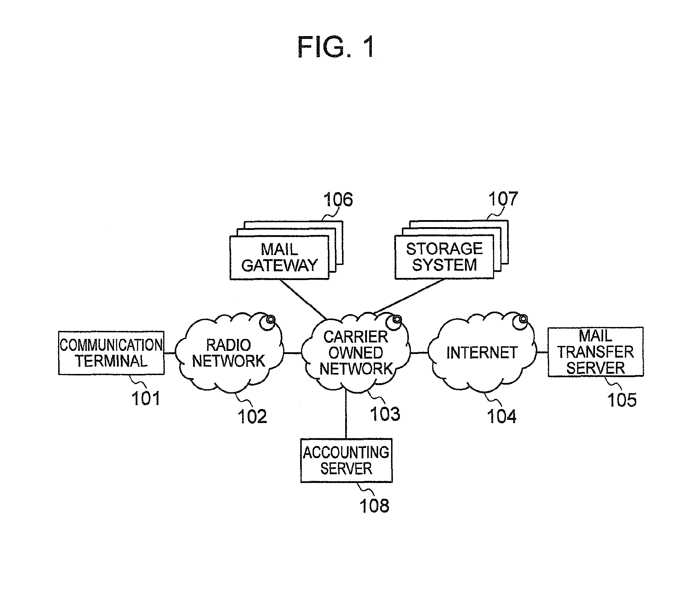

FIG. 1 is a diagram showing an example of the system configuration in the first embodiment.

In this figure, the numeral 101 indicates a communication terminal, the numeral 102 indicates a radio network, the numeral 103 indicates a carrier owned network, the numeral 104 indicates a network such as the Internet, the numeral 105 indicates a mail transfer server, the numeral 106 indicates a mail gateway, the numeral 107 indicates a storage system, and the numeral 108 indicates an accounting server.

The communication terminal 101, a terminal device capable of data communication such as a mobile phone terminal or a PC, is coupled to the carrier owned network 103 via the radio network 102. The radio network 102 is a radio network managed by a mobile phone communication carrier. The carrier owned network 103 is a network and a network facility via which a communication from the radio network 102 is relayed to the Internet 104, mail gateway 106, and storage system 107.

The radio network 102 and the carrier owned network 103 are managed by the mobile phone carrier that manages the mail gateway 106 in this embodiment. The mail transfer server 105, also called an MTA, transmits and receives a mail to and from the mail gateway 106 via the Internet 104. The mail transfer server 105 is installed in an Internet provider or in a mobile phone communication carrier other than the mobile phone communication carrier that manages the carrier owned network 103, that is, a network owned and managed by another communication operator. The mail transfer server 105 relays a mail, received from the mail gateway 106, to the destination and, conversely, relays a mail from the other communication operator, which manages the mail transfer server 105, to the mail gateway 106.

For simplicity, the following describes the mail transmission from the mail gateway 106 to the mail transfer server 105. Note that this embodiment is not limited to this mail transmission but is applicable to the mail transmission from the mail transfer server 105 to the mail gateway 106.

The mail gateway 106 installed on the carrier owned network 103, receives a mail that the communication terminal 101 transmits to the carrier owned network 103 and relays the mail to the mail transfer server 105. In this embodiment, multiple mail gateways 106 are used for load distribution. A mail gateway with an alphabetic subscript such as a mail gateway 106A, indicates a specific server, and a mail gateway with no subscript refers to a generic mail gateway.

In this embodiment, though the communication protocol used between the mail gateway 106 and the communication terminal 101 or between the mail gateway 106 and the mail transfer server 105 is not limited but, in general, one of SMTP, ESMTP (Extended SMTP) and MMS (Multimedia Messaging Service) is used. This embodiment may also be implemented by using other protocols such as HTTP (Hypertext Transfer Protocol), IMAP (Internet Message Access Protocol), and POP (Post Office Protocol).

The storage system 107 installed on the carrier owned network 103 receives and records data such as information on a mail, information on accounting (hereinafter called accounting information) and information on a spam mail from the mail gateway 106. When a failure has occurred in the mail gateway 106, the storage system 107 also transmits the recorded data to the mail gateway 106. Although there is a one-to-one correspondence between the mail gateway 106 and storage system 107 in this embodiment, there may be a one-to-n correspondence between the mail gateway 106 and the storage system 107 to allow multiple storage systems to maintain the same data. For example, when the mail gateway 106 and the storage system 107 are in one-to-two correspondence, the mail gateway 106 transmits data to one of the storage systems107 and the storage system 107 which receives the data transmits the data to another storage system 107 for duplicating the data. Alternatively, the mail gateway 106 may transmit the data separately to two storage systems 107 for duplicating the data.

The accounting server 108 installed on the carrier owned network 103 receives accounting information from the mail gateway 106. The mobile communication carrier charges the communication terminal 101 based on the accounting information stored in the accounting server 108.

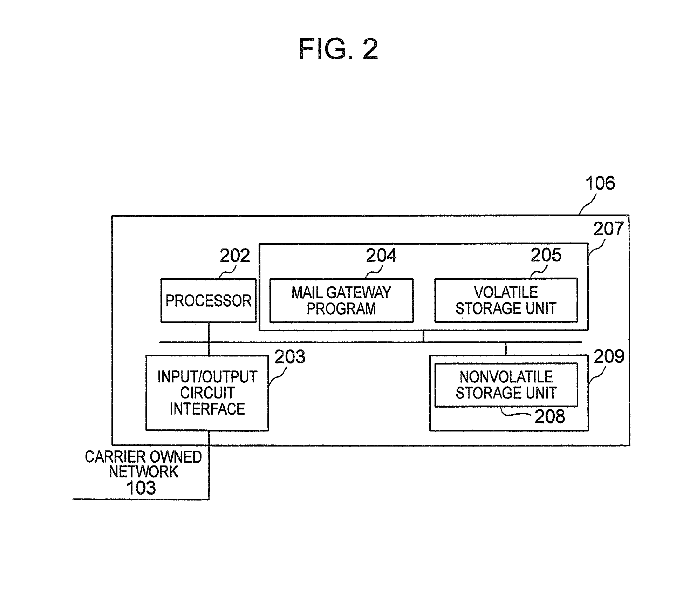

FIG. 2 is a diagram showing the hardware configuration of an information processing device for implementing the mail gateway 106.

The information processing device for implementing the mail gateway 106 comprises a processor 202, a volatile memory 207, a nonvolatile memory 209, an input/output circuit interface 203 for transmitting and receiving data to and from the carrier owned network 103, and internal communication lines for coupling them such as a bus.

The volatile memory 207 stores a mail gateway program 204 and comprises a volatile storage unit 205 in which data is stored. Various control programs in the mail gateway program 204 implement the processing of the mail gateway 106 to receive and relay a mail from the communication terminal 101 to the destination mail server, and are executed by the processor 202. The programs may be either stored in advance in the mail gateway program 204 or installed into the mail gateway program 204 via a removable storage medium or a communication medium (that is, a network, or digital signals or carriers that are propagated through the network) not shown in the figure. In the volatile storage unit 205, the data managed by the mail gateway program 204 is stored. If the server is stopped or restarted due to a power supply failure or a server failure, the information recorded in the volatile storage unit 205 is lost.

The nonvolatile memory 209 comprises a nonvolatile storage unit 208. In the nonvolatile storage unit 208, the data managed by the mail gateway program 204 is stored. Even if the server is stopped or restarted due to a power supply failure or a server failure, the information recorded in the nonvolatile storage unit 208 is maintained.

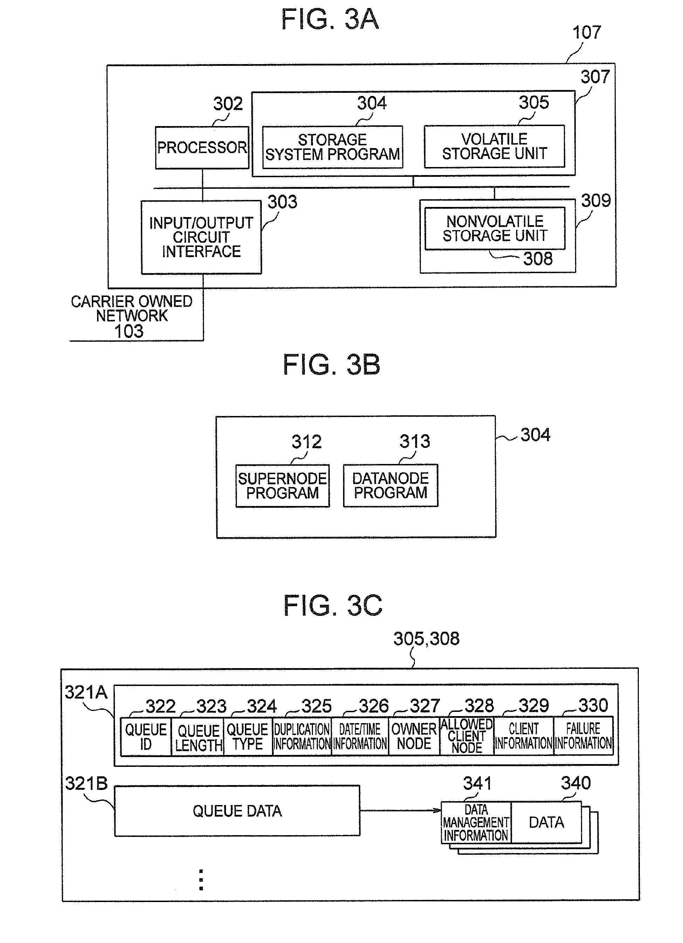

FIG. 3A is a diagram showing the hardware configuration and the software configuration of an information processing device that implements the storage system 107. The information processing device that implements the storage system 107 comprises a processor 302, a volatile memory 307, a nonvolatile memory 309, an input/output circuit interface 303 for transmitting and receiving data to and from the carrier owned network 103, and internal communication lines for coupling them such as a bus.

The volatile memory 307 stores a storage system program 304 and comprises a volatile storage unit 305 in which data are stored. Various control programs in the storage system program 304 implement the processing of the storage system 107 to receive and store data such as mail and accounting information, from the mail gateway 106, and are executed by the processor 302.

The programs may be either stored in advance in the storage system program 304 or installed into the storage system program 304 via a removable storage medium or a communication medium (that is, a network, or digital signals or carriers that are propagated through the network) not shown in the figure.

In the volatile storage unit 305, the data managed by the storage system program 304 is stored. If the server is stopped or restarted due to a power supply failure or a server failure, the information recorded in the volatile storage unit 305 is lost.

The nonvolatile memory 309 comprises a nonvolatile storage unit 308. In the nonvolatile storage unit 308, the data managed by the storage system program 304 is stored. Even if the server is stopped or restarted due to a power supply failure or a server failure, the information recorded in the nonvolatile storage unit 308 is maintained.

FIG. 3B is a diagram showing an example of the configuration of a storage system program 304. The storage system program 304 comprises a SuperNode program 312 and a DataNode program 313.

The SuperNode program 312 is a part where data for managing the data stored in the storage system 107, that is, metadata, is managed. The SuperNode program 312 holds information on the size and the layout of the data stored in the storage system 107, the in-use data size and area, the available data size and area, and the access rights for each data.

When there are multiple storage systems 107, only one of them is required to have the SuperNode program 312 but the other storage systems 107 need not to have (note that the other storage systems 107 may have as a backup of the SuperNode program 312). In the above case, the SuperNode program 312 manages the DataNode programs 313 of multiple storage systems 107 and has the information such as the whole data size and layout, the in-use data size data and area, and the available data size and area, the information on which storage systems 107 store data, and the information on which storage systems 107 store duplicated data.

The DataNode program 313 manages the data stored in the volatile memory 307 or the nonvolatile memory 309 of the storage system 107.

FIG. 3C is a diagram showing an example of the configuration of a volatile storage unit 305 and a nonvolatile storage unit 308. The DataNode program 313 stores queue data 321, data 340, and data management information 341 in the volatile storage unit 305 and the nonvolatile storage unit 308. The DataNode program 313 primarily uses the data 340 and the data management information 341, related to the queue data 321 in the volatile storage unit 305, to manage the data. In the nonvolatile storage unit 308, the data 340 and the data management information 341, set to be stored in the nonvolatile memory, are recorded.

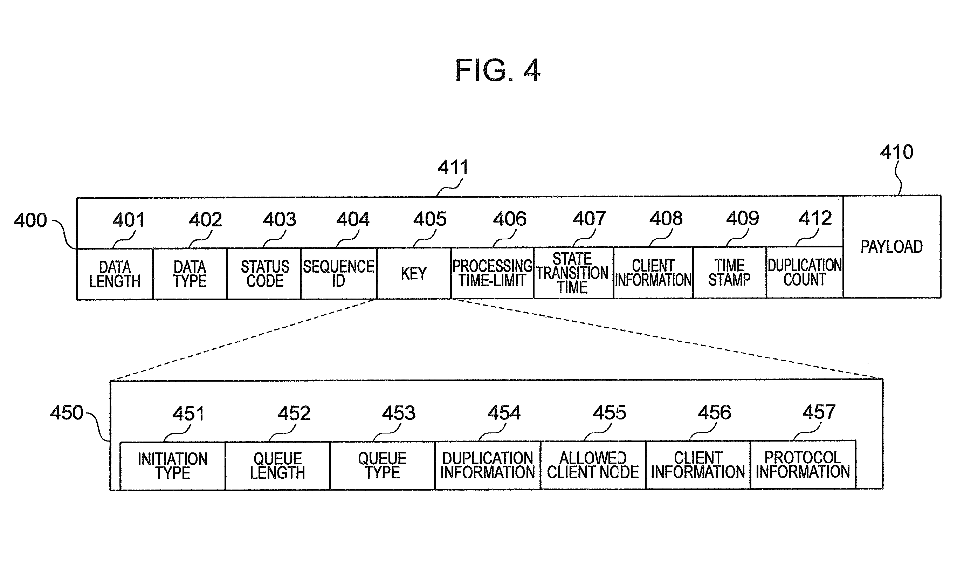

The data 340 is, for example, mail, accounting information, and spam mail information stored by the DataNode program 313, and the data management information 341 is information for managing the data 340. The content of the data management information 341 will be described later with reference to FIG. 4.

The queue data 321 contains Queue ID 322, Queue length 323, Queue type 324, Duplication information 325, Date/time information 326, Owner node 327, Allowed client node 328, Client information 329, and Failure information 330. The queue data 321 is managed with the corresponding data 340 and data management information 341 recorded by the storage system 107 in the volatile storage unit 305 or the nonvolatile storage unit 308. To store data, the DataNode program 313 of the storage system 107 relates the data 340 to the queue data 321 and stores the data in the volatile storage unit 305 or the nonvolatile storage unit 308.

Queue ID 322 is an identifier that uniquely identifies the queue.

Queue length 323 indicates both the amount of and the size of data that can be stored in the queue data 321 (hereinafter called the Queue length).

In Queue type 324, the queue priority and use are set. This embodiment mixes the following three types of data in one queue data 321: data that is stored not in the nonvolatile memory but in the volatile memory; data that is stored in both the nonvolatile memory and the volatile memory; and data that is stored in the nonvolatile memory but not in the volatile memory. Another embodiment may specify the queue storage destination in Queue type 324 for each of the three types of data described above, and create the queue data 321 separately for each of the three types of data. In this case, any of the volatile memory, the volatile memory and the nonvolatile memory, and the nonvolatile memory is set as the queue storage destination. If Queue type 324 indicates storage into the volatile memory, the data 340 and the data management information 341 related to the queue data 321 are stored, not in the nonvolatile memory, but in the volatile memory. If Queue type 324 indicates storage into the volatile memory and the nonvolatile memory, the data 340 and the data management information 341 related to the queue data 321 are stored in the volatile memory and the nonvolatile memory, wherein the queue data 321, data 340, and data management information 341 stored in the nonvolatile memory are used as the backup. If Queue type 324 indicates storage into the nonvolatile memory, the queue data 321 is once stored in the volatile memory and the nonvolatile memory, maintained in the volatile memory until the data 340 and the data management information 341 are stored in the nonvolatile memory, and is deleted from the volatile memory after the data 340 and data management information 341 are stored in the nonvolatile memory.

The queue priority is used when there are multiple storage systems 107, and the mail gateway 106 uses the highest priority queue (hereinafter called the primary). A non-primary queue, which is not recognized by the mail gateway 106, is used as a backup among the storage systems 1 07 normally, and is used as the substitute of the primary when a failure has occurred in the primary. In Queue type 324, it may also be set as a use to select whether or not to use the nonvolatile memory, or whether or not to establish a one-to-one correspondence between the mail gateway 106 and the queue.

In Duplication information 325, the information indicating which storage system 107 is the primary or the backup is stored when there is a primary-backup relation between the storage systems 107.

In Date/time information 326, the date and time (hereinafter called a date/time) at which the storage system 107 created the queue data 321 as well as the last update date/time are stored.

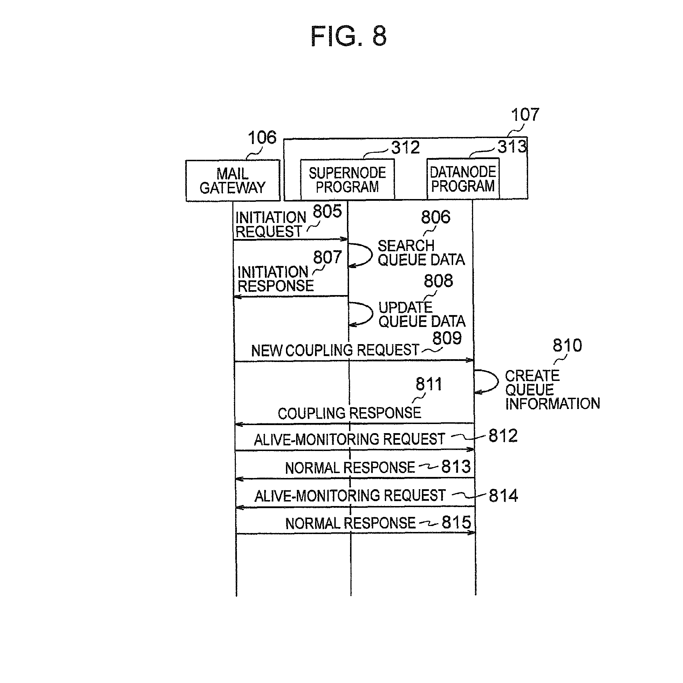

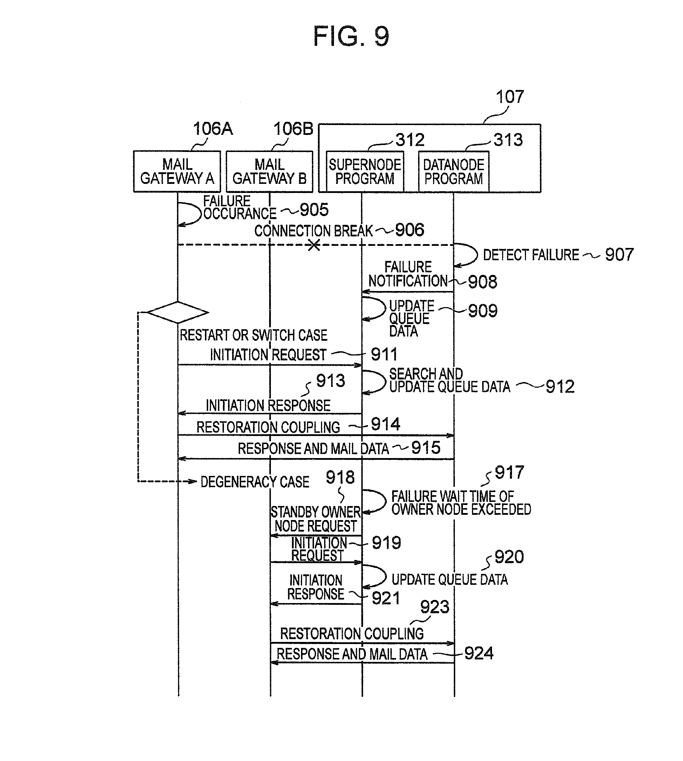

In Owner node 327, the information such as an IP address that uniquely identifies the mail gateway 106 corresponding to the queue data 321 is stored. The storage system 107 and the mail gateway 106, which is the owner node, check each other if they are alive and, when a failure has occurred, the notification is transmitted to the SuperNode program 312 (The detail will be described later with reference to FIG. 8 and FIG. 9).

In Allowed client node 328, the IP address of the server of the mail gateway 106, which has the management authority and the access authority for stored data 400, or the identification information that uniquely identifies the mail gateway 106 is stored. In Allowed client node 328, the identification information on multiple mail gateways 106 can be stored.

In Client information 329, the read/write authority for the mail gateway 106, corresponding one-to-one to Allowed client node 328, is set.

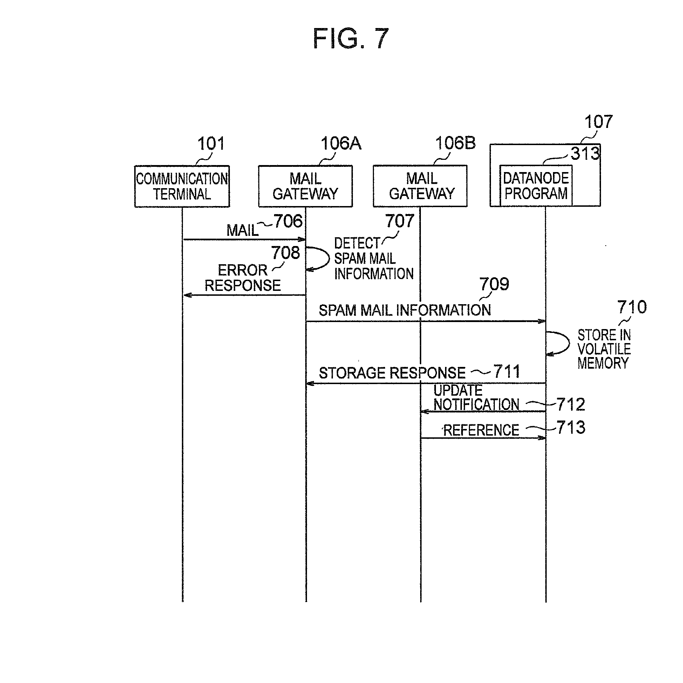

In addition to the access authority function in a general file system, the storage system 107 has the function to automatically notify the multiple mail gateways 106, which are set in Allowed client node 328, of the data updates (the detail will be described later with reference to FIG. 7) and performs access control for each mail gateway 106, which are set in Allowed client node 328, by referring to Client information 329. All mail gateways 106 registered in advance in the storage system 107 can also be set in Allowed client node 328.

Failure information 330 is information stored by the storage system 107 when a failure has occurred in the mail gateway 106 that is set in Owner node 327. More specifically, the failure date/time and the detected failure content are set (the detail will be described later with reference to FIG. 9).

Although the SuperNode program 312 and the DataNode program 313 coexist in one storage system 107 (storage system program 304) in this embodiment, they may be separated, that is, the SuperNode program 312 is stored in one storage system and the DataNode program 313 in another storage system. The configuration described above, where the SuperNode program 312 and the DataNode program 313 are separated, is efficient when the mail system is scaled out. In this case, when data is written in the storage systems, the mail gateway 106 first updates the metadata stored in the storage system that has the SuperNode program 312 and, after that, transmits the data to the storage system that has the DataNode program 313.

FIG. 4 is a diagram showing an example of data exchanged between the mail gateway 106 and the storage system 107. In this figure, the numeral 400 indicates the configuration of data (hereinafter called stored data) used when data is exchanged between the mail gateway 106 and the storage system 107 and is stored in the storage system 107, and the numeral 450 indicates the configuration of data (hereinafter called an initiation request) transmitted from the mail gateway 106 to the storage system 107 at queue initiation time (the detail will be described later with reference to FIG. 8 and FIG. 9).

The stored data 400 contains a stored data header 411 and a payload 410. When the stored data 400 is received, the storage system 107 stores the stored data 400 in the volatile memory (or nonvolatile memory as requested) to analyze the control information included in the stored data header 411 and then the storage system 107 copies the content of the control information, included in the stored data header 411, to the data management information 341.

The payload 410 is the body of data stored by the mail gateway 106. For example, data such as a mail, accounting information, spam mail information, and log is stored. In the case of updating data already maintained in the storage system 107, the difference data for the update can be included in the payload 410.

The stored data header 411 contains the control information: Data length 401, Data type 402, Status code 403, Sequence ID 404, Key 405, Processing time-limit 406, State transition time 407, Client information 408, Timestamp 409, and Duplication count 412. Data length 401 is the length of the whole stored data 400. Data type 402 is a value indicating the use of the data. The storage system 107 references this value to determine how to process the data. Examples of Data type 402 set in this embodiment are as follows.
- Setting of a request or a response. The mail gateway 106 transmits a request to a storage system 107, and the storage system 107 transmits a response.
- Setting of the processing to be performed by the storage system 107 such as new storage; update, deletion, or inquiry of already-stored data; and cancellation of the request. For the already-stored data, the storage system 107 performs the processing for the data whose key matches Key 405.
- Setting of the data storage destination (The writing destination is any of the following: the volatile memory is specified but the nonvolatile memory is not specified; the volatile memory and the nonvolatile memory are specified; and the volatile memory is not specified but the nonvolatile memory is specified).
- Setting of whether to write into the nonvolatile memory synchronously or asynchronously.

Synchronous writing into the nonvolatile memory means that a response is returned to the mail gateway 106 after the completion of the writing into the nonvolatile memory the stored data 400 received by the storage system 107 from the mail gateway 106. Asynchronous writing means that a response is returned to the mail gateway 106 without waiting for the completion of the writing the stored data 400 described above into the nonvolatile memory, for example, when the storage system 107 receives the stored data 400 from the mail gateway 106.

Synchronous writing guarantees that the stored data 400 is in the nonvolatile memory when the mail gateway 106 receives a response from the storage system 107. Conversely, asynchronous writing does not guarantee that the stored data 400 is in the nonvolatile memory even if the mail gateway 106 receives a response.

In the asynchronous writing, the storage system 107 may write one stored data 400 and another stored data 400 into the nonvolatile memory at a time. Writing data at a time increases the efficiency of writing into the nonvolatile memory, resulting in speeding up writing processing into the nonvolatile memory in the storage system 107.
- Setting of the processing after State transition time 407 (copy, deletion, invalidation, etc. in nonvolatile memory).
- Setting of the nonvolatile memory type (SSD, hard disk, NAS (Network Attached Storage), SAN, etc.).
- Setting of whether or not the processing time-limit can be changed by the storage system 107 when access is made to the nonvolatile memory.

In Data type 402, not only one item but also multiple items of the items given above may be stored. In Status code 403, a status code indicating the details of a response is stored when Data type 402 indicates a response; otherwise, Status code 403 is not used. Sequence ID 404 is an identifier that uniquely identifies a data exchange between the mail gateway 106 and the storage system 107. The same identifier is assigned to the stored data 400 and its response (storage response 420). The mail gateway 106 issues a different sequence ID 424 each time the mail gateway 106 transmits data to the storage system 107.

Key 405, an identifier that uniquely identifies the stored data 400, is set by the mail gateway 106 to store the data. The DataNode program 313 of the storage system 107, which stores the stored data, is determined by Key 405. In this embodiment, the mail gateway 106 that transmits the stored data 400 and the storage system 107 that has the queue data 321, in which for example, the IP address of the mail gateway 106 is stored in Owner node 327, may be linked using the Key 405.

For the data specified by Key 405, the storage system 107 can perform the following processing: update; deletion; status inquiry as to whether or not the specified data is in the nonvolatile memory; cancelation when the data specified by the key is being processed; and copy of data, stored in the volatile memory but not in the nonvolatile memory, to the nonvolatile memory.

Processing time-limit 406 is a limit date/time of the time during which the storage system 107 must process data, and the storage system 107 performs the processing before Processing time-limit 406. If the processing is not completed even after Processing time-limit 406, a failure response is returned to the mail gateway 106.

State transition time 407 is a date/time at which the storage system 107 performs the processing specified in Data type, if the data exists in the volatile memory or in the nonvolatile memory even after this date/time. For example, it can be set that the mail gateway 106 stores data once in the volatile memory and, after State transition time 407, the storage system 107 automatically stores data in the nonvolatile memory. In addition, the mail gateway 106 may set that the data be deleted, or access to the data be rejected, after State transition time 407.

A data access authority is stored in Client information 408 as in Client information 329. Optionally, the information on the Allowed client node 328 can also be added to Client information 408.

Timestamp 409 is a day/time added by the mail gateway 106. If there is a data difference between the mail gateway 106 and the storage system 107 or, when there are multiple storage systems 107, between the storage systems, the mail gateway 106 uses Timestamp 409 to determine which data is correct. Instead of Timestamp 409, the data version (number of updates) may also be specified.

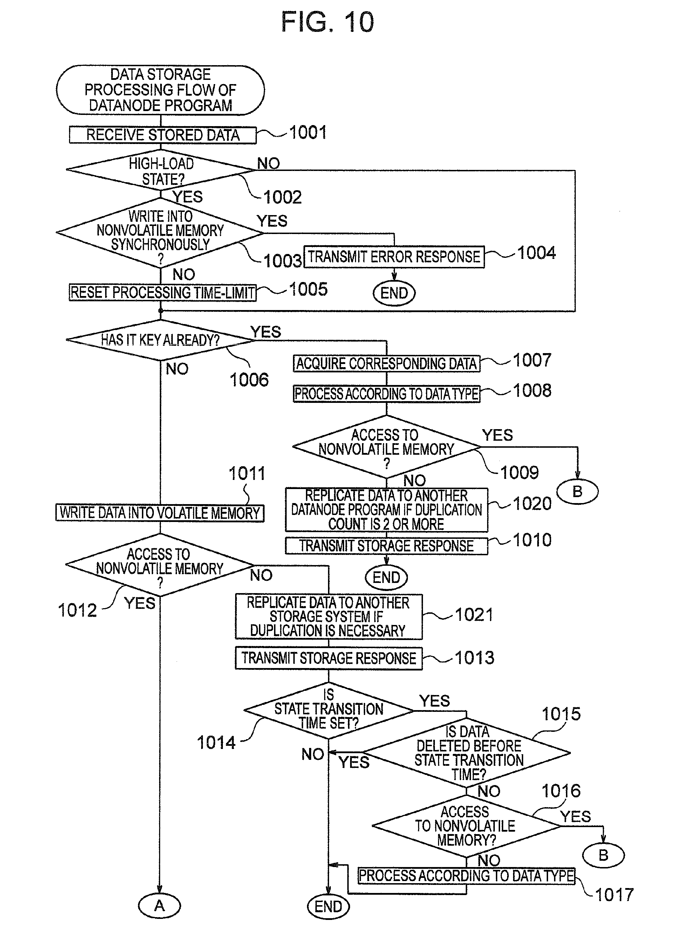

Duplication count 412 determines the number of storage systems 107 in which the stored data 400 is to be stored. For example, "2" in Duplication count 412 indicates that two storage systems 107 will store the stored data 400 (hereinafter, storing a duplication of the stored data 400 in multiple storage systems 107 is called data replication). If the received Duplication count 412 is "2" or more, the storage system 107 subtracts "1" from Duplication count 412 and transfers the stored data 400 to another storage system 107 (the detail will be described with reference to FIG. 10).

An initiation request 450 contains the following: Initiation type 451; Queue length 452; Queue type 453; Duplication information 454; Allowed client node 455; Client information 456; and Protocol information 457. Initiation type 451 indicates if the mail gateway 106 requests a new-coupling initiation or a re-coupling initiation to the SuperNode program 312 of the storage system 107. Queue length 452 is a queue length that the mail gateway 106 wants to reserve, and the storage system 107 reflects the queue length on Queue length 323 of the queue data 321. Similarly, Queue type 453, Duplication information 454, Allowed client node 455, and Client information 456 correspond to the items in the queue data 321, respectively. Protocol information 457 is information via which protocol or via which protocol and via which port the mail gateway 106 and the queue data 321 communicate. In this embodiment, TCP (Transmission Control Protocol), UDP (User Datagram Protocol), or a proprietary protocol is stored as the communication protocol, and the port that will be used is stored.

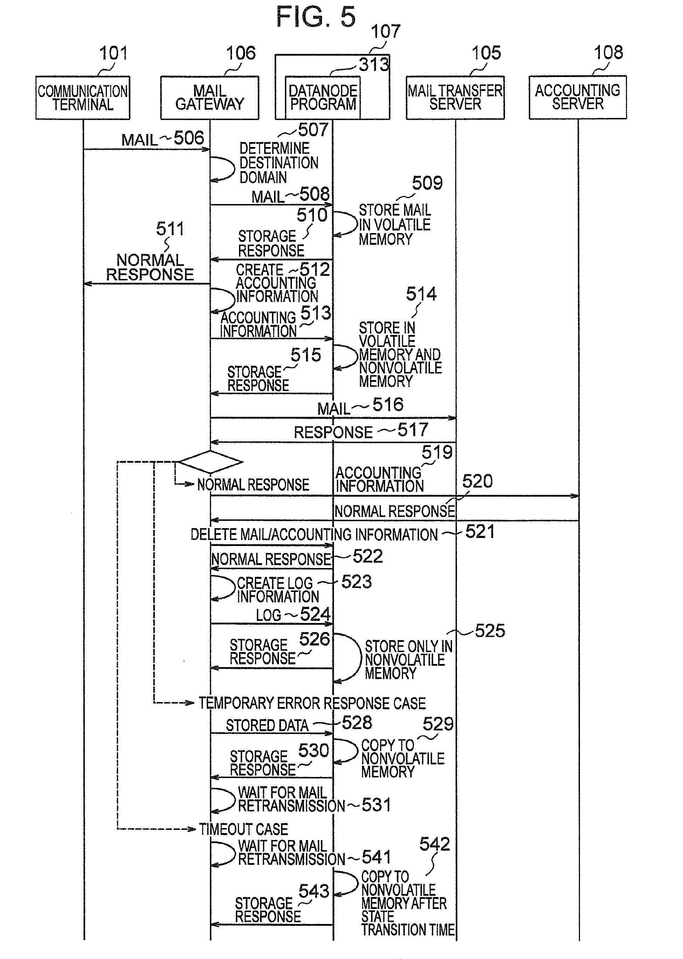

FIG. 5 is a diagram showing an example of the mail relay sequence.

In the mail relay sequence, the storage data 400 and the storage response 420 are exchanged between the mail gateway 106 and the DataNode program 313 of the storage system 107. To describe the sequence specific to the mail relay processing, the stored data 400 is represented not by "stored data 400" but by the type of data stored in the payload 410 in the description below. When the data stored in the payload 410 has no name, the data is represented directly by the stored data 400. The stored data 400 that is transmitted from the storage system 107 to the mail gateway 106 as a response is represented as a storage response. The storage system 107 stores data in the volatile storage unit 305 and the nonvolatile storage unit 308, but the mail gateway 106 simply identifies two types of memory, nonvolatile memory and volatile memory. Therefore, in the description below, the storage location of the storage system 107 is represented as the volatile memory or the nonvolatile memory, uniformly.

First, the communication terminal 101 transmits mail 506 to the mail gateway 106. Next, the mail gateway 106 performs the processing to determine the destination domain (step 507). The destination domain refers to the part following the At sign (@) in the destination mail address of the mail. The mail gateway 106 inquires the DNS (Domain Name System) server about the destination domain to determine to which mail transfer server 105 the mail is to be transmitted.

In step 507, the mail gateway 106 checks the destination domain to determine if the mail is to be stored in the volatile memory or in the nonvolatile memory. For example, if the destination domain is a reliable domain such as that of a mobile communication carrier or a major Internet provider, the mail transmission (step 516) from the mail gateway 106 to the mail transfer server 105 is less likely to fail. Therefore, the mail gateway 106 determines to store the mail, not in the nonvolatile memory, but in the volatile memory. Conversely, if the destination domain is a domain where the mail gateway 106 already has mails that could not be transmitted or where a transmission failure has occurred frequently in the past, the mail gateway 106 determines to store the mail in both the nonvolatile memory and the volatile memory.

Next, the mail gateway 106 transmits the mail 508 to the DataNode program 313. At this time, it is set in Data type 402 of the mail 508 to "Write newly into volatile memory" and "Copy to nonvolatile memory after State transition time 407".

Next, according to the received mail 508, the DataNode program 313 stores the mail in the volatile memory (step 509). If the mail succeeds in being stored in step 509, the DataNode program 313 returns a storage response 510, which indicates a success to the mail gateway 106, and the mail gateway 106 transmits a normal response to the communication terminal 101 (step 511). The DataNode program 313 sets a code, which indicates the response, in Data type 402 of the storage response 510. Although not described FIG. 5, if the mail fails to be stored in step 509, the DataNode program 313 returns the storage response 510, which indicates a failure, to the mail gateway 106, and the mail gateway 106 returns an error response to the communication terminal 101 in step 511.

Next, the mail gateway 106 creates the accounting information (step 512). Next, the mail gateway 106 transmits the accounting information and the control information to the DataNode program 313 (step 513). The mail gateway 106 determines that the accounting information is important and it is set to "Write newly into nonvolatile memory and volatile memory", "Specify processing time-limit when writing data into nonvolatile memory", and "Write into nonvolatile memory synchronously" in Data type 402 of the accounting information 513. Next, according to the received accounting information 513, the DataNode program 313 stores the accounting information in the volatile memory and the nonvolatile memory (step 514). If there are multiple writing processes into the nonvolatile memory in step 509, the DataNode program 313 performs all the writing processes into the nonvolatile memory at a time. Next, the DataNode program 313 transmits a storage response 515 to the mail gateway 106 after the writing into the nonvolatile memory is completed.

Next, the mail gateway 106 transmits mail 516 to the mail transfer server 105. Next, the mail transfer server 105 transmits a response 517 to the mail gateway 106. If the mail transfer server 105 receives the mail 516 normally, the mail transfer server 105 transmits the response 517, which is a normal response, and step 519 is performed. If the mail transfer server 105 cannot receive the mail 516 temporarily, the mail transfer server 105 transmits the response 517, which indicates a temporary error, and step 528 is performed. If the response 517 is not received from the mail transfer server 105 and a timeout occurs while the mail gateway 106 is waiting for a response, step 541 is performed. If the response 517 is a normal response, the mail gateway 106 transmits accounting information 519 to the accounting server 108.

Next, the accounting server 108 transmits a normal response 520 to the mail gateway 106. Next, the mail gateway 106 transmits a mail/accounting information deletion 521. At this time, to "Delete data whose key matches the specified key" is set in Data type 402 of the mail/accounting information deletion 521. Next, according to the mail/accounting information deletion 521, the DataNode program 313 deletes the data whose key matches the specified key and, when the processing is terminated, transmits a normal response 522 to the mail gateway 106. Next, the mail gateway 106 performs log creation processing 523 and transmits a log 524 to the DataNode program 313. At this time, it is set in Data type 402 of the log 524 to "Specify, not volatile memory, but nonvolatile memory as writing destination" and "Write into nonvolatile memory asynchronously".

Next, according to the received log 524, the DataNode program 313 stores the log, not into the volatile memory, but into the nonvolatile memory asynchronously (step 525). In step 525, the DataNode program 313 transmits a storage response 526 when the log 524 is once written into the volatile memory, copies the data, which has been written in the volatile memory, to the nonvolatile memory, and deletes the data from the volatile memory.

If the response 517 is a temporary error response, the mail gateway 106 transmits stored data 528. It is set in Data type 402 of the storage request 528 to "Copy data whose key matches the specified key to nonvolatile memory" and "Specify processing time-limit 406". Next, the DataNode program 313 copies the data, which is already in the volatile memory and whose key matches the specified key, to the nonvolatile memory according to the received stored data 528 (step 529). Next, the DataNode program 313 transmits the storage response 530 to the mail gateway 106. Next, the mail gateway 106 enters the state of waiting for mail retransmission to the mail transfer server 105 (step 531) and, when the mail gateway 106 enters the re-transmittable state, step 516 is performed.

When there is no response 517 from the mail transfer server 105 and a response wait timeout occurs on the mail gateway 106, the mail gateway 106 enters the state of waiting for mail retransmission to the mail transfer server 105 (step 541). When the mail gateway 106 enters the re-transmittable state from step 541, step 516 is performed. Next, the DataNode program 313 detects that State transition time 407 of the mail 508 has passed and copies the mail 508, which is already in the volatile memory, to the nonvolatile memory (step 542). In this embodiment, according to a response-wait timeout which occurs on the mail gateway 106 and a value specified in State transition time 407 of the mail 508, the processing of step 541 and step 542 is performed in this order. Next, the DataNode program 313 transmits a storage response 543, which indicates that the data has been copied to the nonvolatile memory, to the mail gateway 106 described in Allowed client node 455 of the mail 508. Note that the storage response 543 may be transmitted only when an error occurs in step 542 or that the present invention may be implemented even if the storage response 543 itself is not transmitted.

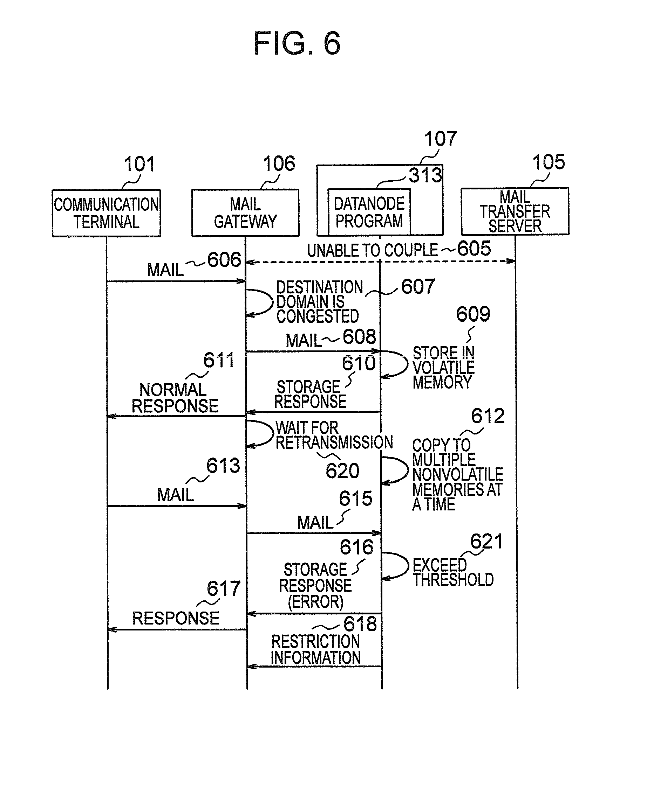

FIG. 6 is a diagram showing an example of the mail relay sequence of the mail gateway 106 when mail cannot be transmitted to the mail transfer server 105 for a predetermined period of time. Mails cannot continuously be transmitted to the mail transfer server 105 because a failure or congestion occurs in the mail transfer server 105, because the network between the mail gateway 106 and the mail transfer server 105 is disconnected, etc. In the above case, the mail gateway 106 fails to transmit all mails to the mail transfer server 105, and so the mail gateway 106 must maintain the mails until the mail transmission to the mail transfer server 105 becomes possible. As shown in FIG. 5, if the response from the mail transfer server indicates a temporary error or there is no response in the mail relay sequence, the DataNode program 313 eventually copies the mail to the nonvolatile memory. When mails cannot be transmitted to the mail transfer server 105 and, at the same time, the mail traffic to the mail transfer server 105 is heavy, the processing of copying the mails to the nonvolatile memory of the DataNode program 313 is most likely to become a bottleneck. To solve this problem, the DataNode program 313 performs at a time multiple copy processing to the nonvolatile memory according to the processing state of the DataNode program 313 as shown in FIG. 6.

In FIG. 6, it is assumed that the mail gateway 106 and the mail transfer server 105 have been unable to couple for a predetermined time or longer (step 605). First, the communication terminal 101 transmits a mail 606 to the mail gateway 106. Next, the mail gateway 106 performs the processing 607 of checking if the destination of the mail 606 is a domain to which the mail cannot be transferred now (hereinafter called a restricted domain).

The mail gateway 106 manages mails for each destination domain and, if mails cannot be transmitted to a domain, the mails to the domain are accumulated. If the amount of accumulated mails has exceeded the predefined threshold, the mail gateway 106 determines that the domain is a restricted domain. If the number of mail transmission failures within a pre-set time is equal to or larger than the predetermined threshold, the mail gateway 106 also determines that the domain is a restricted domain. In addition, the operator of the mail gateway 106 may manually set a restricted domain. In step 607, if the destination of the mail 606 is the same as a restricted domain determined as described above, the mail 606 cannot be transmitted for the pre-set time or longer and, therefore, the mail gateway 106 determines to store the mail 606 also in the nonvolatile memory.

Next, the mail gateway 106 transmits the mail 608 to the DataNode program 313. At this time, it is set in Data type 402 of the mail 608 to "Write newly into nonvolatile memory and volatile memory" and to "Write into nonvolatile memory asynchronously".

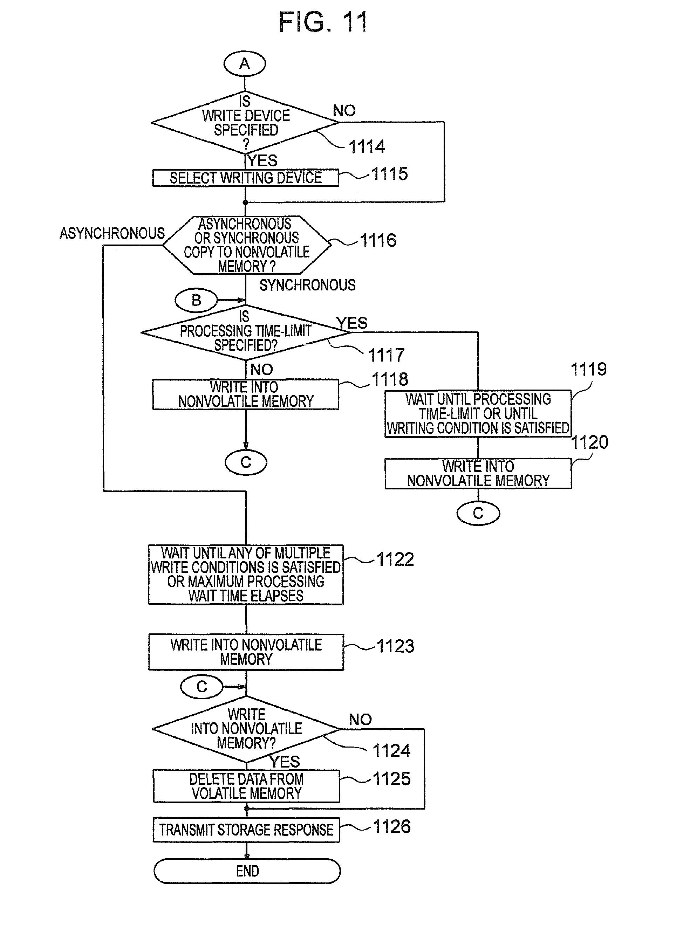

Next, the DataNode program 313 stores the mail in the volatile memory according to the received mail 608 (step 609). If the mail succeeds in being stored in step 609, the DataNode program 313 returns a storage response 610, which indicates a success to the mail gateway 106 and the mail gateway 106 transmits a normal response 611 to the communication terminal 101. Next, the mail gateway 106 enters the state of waiting for mail retransmission to the mail transfer server 105 (step 620) and, when the mail server 106 enters the re-transmittable state, step 608 is performed. Next, the DataNode program 313 performs, after step 609, multiple copy processing 612 to nonvolatile memories at a time. The interval between step 609 and step 612 is determined by the DataNode program 313 (the determination method will be described with reference to FIG. 11). Even if it is set in Data type 402 of another mail to "Write newly into nonvolatile memory and volatile memory" and "Minimize wait time when writing into nonvolatile memory", the DataNode program 313 may ignore Processing time-limit 406 in the situation shown in FIG. 6.

Next, the following describes the case where the communication terminal 101 transmits the mail 613 different from the mail 606. The mail gateway 106 receives the mail 613 and transmits the mail 615 to the DataNode program 313.

At this time, it is set in Data type 402 of the mail 613 to "Write newly into nonvolatile memory and volatile memory" and "Write into nonvolatile memory synchronously".

Next, the DataNode program 313 tries to store the mail in the nonvolatile memory according to the received mail 615, but the DataNode program 313 detects that the copy processing to the nonvolatile memory has exceeded the critical threshold (step 621) and returns a storage response 616 that indicates an error. In Status code 403 of the storage response 616, a status indicating that the writing into the nonvolatile memory has resulted in an error is set.

When receiving the storage response 616, the mail gateway 106 transmits the response 617, which is an error response, to the communication terminal 101. When receiving the storage response 616, the mail gateway 106 can also change Data type 402 from "Write into nonvolatile memory synchronously" to "Write into nonvolatile memory asynchronously" and select either retransmitting the mail 615 to the storage system 107 or retransmitting the mail 615 to another storage system 107. As a result, if the storage response 616 that is a normal response is received, the mail gateway 106 transmits a response 617 that is a normal response to the communication terminal 101.

After step 621, the DataNode program 313 transmits restriction information 618, which indicates that writing into the nonvolatile memory is currently restricted, to the pre-initiated mail gateways 106. The mail gateways 106 restrict the transmission of stored data to the storage system 107 that has transmitted the restriction information 618.

FIG. 7 is a diagram showing an example of the sequence in which multiple mail gateways 106 reference the information stored in the DataNode program 313. Although spam mail information is used as an example of data referenced by multiple mail gateways 106 in this embodiment, other information may also be referenced. The spam mail information is information on mails detected by the mail gateway 106 as spam mails, and other mail gateways 106 reference the information described above to determine if they receive spam mails afterward.

First, the communication terminal 101 transmits mail 706 to the mail gateway 106. The mail gateway 106 detects if the received mail is a spam mail (step 707) and transmits an error response 708 to the communication terminal 101. Almost at the same time step 708 is performed, the mail gateway 106 transmits spam mail information 709 to the DataNode program 313. The mail gateway 106 sets "Write newly into volatile memory" in the Data type 402 of the spam mail information 709 and sets the information on all servers of the mail gateway 106, which will reference the spam mail, in Allowed client node 455. The DataNode program 313 performs the storage processing 710 of the received spam mail information 709 in the volatile memory and transmits the storage response 711 to the mail gateway 106A. Next, the DataNode program 313 transmits the update notification 712 to all mail gateways 106 described in Allowed client node 455 of the spam mail information 709. The mail gateway 106B that receives the update notification 712 references the updated information (step 713). Note that, instead of step 713, it is also possible that the DataNode program 313 transmits the update notification 712 including the updated information, which is acquired by the mail gateway 106. In this case, step 713 is omitted.

FIG. 8 is a diagram showing the start sequence of the mail gateway 106 and the alive-confirmation sequence between the mail gateway 106 and the storage system 107. It will be described below that the storage system 107 in FIG. 8 and FIG. 9 is divided into the SuperNode program 312 and the DataNode program 313. The configuration of initiation requests 805 and 911 in FIG. 8 and FIG. 9 is the same as that of the initiation request 450.

First, the mail gateway 106 transmits the initiation request 805 to the SuperNode program 312 to initiate the mail gateway 106. The initiation request 805 is data having the same configuration as that of the initiation request 450. When receiving the initiation request 805, the SuperNode program 312 searches, from the unused queue data 321, for the DataNode program 313 that satisfies the condition (step 806) and transmits an initiation response 807, which includes the IP address of the DataNode program 313, to the mail gateway 106. Next, the SuperNode program 312 performs the update processing 808 of the queue data 321.

Next, the mail gateway 106 transmits a request (hereinafter called a new coupling request) 809 to newly initiate information in the queue information of the DataNode program 313. In the new coupling request 809, the authentication information on the mail gateway 106, the used data length and use are described. Next, the DataNode program 313 performs the queue information creation processing 810. Next, the DataNode program 313 transmits a coupling response 811, which is a normal response to the new coupling request 809, to the mail gateway 106. When receiving the coupling response 811, the mail gateway 106 enters the mail relay-capable state where the mail relay shown in FIG. 5 becomes capable.

The mail gateway 106 transmits an alive-monitoring request 812 to the DataNode program 313 to monitor if the storage system 107 is operating normally. The DataNode program 313 receives the alive-monitoring request 812 and transmits a normal response 813 to the mail gateway 106. The DataNode program 313 also transmits an alive-monitoring request 814 to monitor the normal operation of the mail gateway 106, and the mail gateway 106 transmits a normal response 815. Note that, instead of the alive-monitoring processing in 811-815 performed by the mail gateway 106 and DataNode program 313, it is also possible to judge that the servers are alive (alive monitoring) if any errors do not occur from the mail gateway 106 and the DataNode program 313 in the sequence as shown in FIG. 5.

FIG. 9 is a diagram showing the sequence between the mail gateway 106 and the storage system 107 when the mail gateway 106 is restarted, when the mail gateway 106 is switched, and when the mail gateway 106 is degenerated. The switching of the mail gateway 106 here means that, when the mail gateway 106 fails, the mail gateway 106 other than the failed mail gateway 106 is started to perform the processing as a substitute for the failed mail gateway 106. The degeneracy of the mail gateway 106 means that one of, or a part of, the multiple mail gateways 106 in operation are stopped with the result that the number of operating mail gateways 106 is decreased. The mail gateways 106 degenerate when a server fails and the failed server is not restarted or when a part of the servers are stopped during the operation.

In FIG. 9, each of a mail gateway A 106A and a mail gateway B 106B indicates one of the multiple mail gateways 106, and it will be described below that the storage system 107 is divided into the SuperNode program 312 and the DataNode program 313.

First, assume that the mail gateway A 106A has failed (step 905). Because of the connection break 906 from the mail gateway A 106A, the DataNode program 313 performs the failure detection processing 907. The connection break 906 is the break of the connection established by the new coupling request 809 and usually used in the alive-monitoring in steps 812-815. The DataNode program 313 transmits a failure notification 908 to the SuperNode program 312.

By the failure notification 908, the SuperNode program 312 detects that a failure occurs in the mail gateway A 106A that is the owner node of the DataNode program 313, and the DataNode program 313 writes (updates) the information, which indicates that the DataNode program 313 is waiting for the owner node to be restored, in the queue data 321 (step 909).

The following describes, beginning in step 911, the case where the mail gateway A 106A is restarted after the failure occurrence 905 or where the mail gateway 106 is switched. In the description below, when the mail gateway A 106A is switched to another mail gateway, the server of the failed mail gateway 106 and the server of the substitute mail gateway 106 are different in practice, the processing that the mail gateway performs and the data that is transmitted/received are almost the same between the two servers. Therefore, in this embodiment, the failed mail gateway 106 and the substitute mail gateway 106 are represented collectively as the mail gateway A 106A.

First, the mail gateway A 106A transmits an initiation request 911 to the SuperNode program 312. The initiation request 911 contains is the information on the initiation request 805 and further the information indicating that the request is a re-coupling request (hereinafter called a re-coupling flag), which is set in the Initiation type 451. When receiving the initiation request 911, the SuperNode program 312 searches the queue data 321 and updates it (step 912). In step 912, if the information on the transmitting server of the initiation request 911 matches the information on the owner node of the DataNode program 313 whose owner node has failed, the SuperNode program 312 transmits an initiation response 913, which includes the IP address of the DataNode program 313 described above, to the mail gateway 106. In step 912, if the initiation request 911 includes the re-coupling flag, the SuperNode program 312 transmits the initiation response 913, which includes the IP address of the DataNode program 313 whose owner node has failed, to the mail gateway 106. In step 912, if none of the above two conditions is satisfied, the subsequent processing is performed in the same sequence as that of the initiation request 805, although not shown in the figure.

Next, the mail gateway A 106A transmits a restoration coupling 914 to the DataNode program 313. Next, the DataNode program 313 transmits the response and mail data 915 to the mail gateway A 106A. After step 915, the mail gateway A 106A enters the relay-capable state. In addition, the mail gateway A 106A and the DataNode program 313 perform alive-monitoring in steps 812-815.

Next, the following describes, beginning in step 917, the case where the mail gateway A 106A degenerates after the failure occurrence 905. The SuperNode program 312 detects that, after detecting the owner node failure, a waiting time for the initiation request 911 from the mail gateway A 106A (hereinafter called a failure wait time) has elapsed (step 917). Next, the SuperNode program 312 searches for the mail gateway 106 (hereinafter called a standby owner node) that will take over the processing of the mail gateway A 106A, and transmits a standby owner node request 918 to a mail gateway B 106B, to request it to continue the processing as the standby owner node. Note that, instead of the SuperNode program 312, the DataNode program 313 may perform step 917 and transmit the standby owner node request 918.

When receiving the standby owner node request 918, the mail gateway B 106B transmits an initiation request 919 to the SuperNode program 312. In steps 919-924, the almost same processing as that in steps 911-915 is performed, and the mail gateway B 106B enters the mail relay-capable state.

The SuperNode program 312 and the DataNode program 313 in FIG. 9 may be configured as separate server devices. Although not shown in FIG. 9, when there are multiple storage systems 107 and the SuperNode program 312 and the DataNode program 313 are configured as separate servers, the alive-monitoring is performed between the SuperNode program 312 and the DataNode program 313 and, when the DataNode program 313 fails, the SuperNode program 312 performs the processing such as switching the failed DataNode program 313 to another DataNode program 313.

FIG. 10 and FIG. 11 are diagrams showing the data storage processing flow of the DataNode program 313 of the storage system 107.

First, the DataNode program 313 receives stored data from the mail gateway 106 (step 1001).

The DataNode program 313 checks if any mail cannot be transmitted to the mail transfer server 105 as shown in FIG. 6 and, as a result, the DataNode program 313 is in the high-load state (step 1002). If the DataNode program 313 is not in the high-load state, step 1006 is performed.

The high-load state described above refers either to the state, in which a large amount of data is written in the nonvolatile memory of the DataNode program 313 and the number of data waiting to be written into the nonvolatile memory exceeds the threshold or to the state in which the nonvolatile memory write time has exceeded the threshold.

The DataNode program 313, if in the high-load state in step 1002, checks if Data type 402 indicates "Write into nonvolatile memory synchronously" (step 1003) and, if so, transmits an error response (step 1004) and terminates the processing. Because the DataNode program 313 is in the high-load state in step 1005, the DataNode program 313 changes Processing time-limit 406 from the value that was set by the mail gateway 106 to the value best suited to the DataNode program 313 to increase the access efficiency to the nonvolatile memory of the DataNode program 313.

In step 1006, the DataNode program 313 checks if it already has Key 405. If it has Key 405, the DataNode program 313 acquires the data whose key matches Key 405 (step 1007) and performs the storage processing according to Data type (step 1008). In step 1008, the DataNode program 313 updates or deletes data, checks the status of data in the volatile memory or, if data is being stored, cancels the data. In step 1009, the DataNode program 313 checks if access to the nonvolatile memory is necessary to continue the processing according to Data type 402. More specifically, the DataNode program 313 checks if the data in the volatile memory must be copied to the nonvolatile memory, if the data in the nonvolatile memory must be updated or deleted, etc. If in step 1009, access to the nonvolatile memory is necessary, step 1117 in FIG. 11 is performed; otherwise, step 1020 is performed.

Step 1020 is the data replication processing performed if Duplication count 412 of the stored data is "2" or more. More specifically, the DataNode program 313 (hereinafter called DataNode program A) transfers the stored data, by subtracting "1" from Duplication count 412, to another DataNode program 313 (hereinafter called DataNode program B) and receives a storage response, which indicates that the data has been stored normally, from DataNode program B.

If Duplication count 412 is "2" or more when DataNode program B receives the stored data 400 (that is, the duplication count is "3" or more when DataNode program A receives the stored data), DataNode program B transfers the stored data to still another DataNode program 313 (hereinafter called DataNode program C) and, after receiving the normal response from DataNode program C, transmits the normal response to DataNode program A. The larger Duplication count 412 is, the more times the DataNode program 313 transfers the stored data to the next DataNode program 313.

A DataNode program, which receives the stored data with Duplication count 412 of "2" or more, transmits the stored data to another DataNode program 313 by subtracting "1" from Duplication count 412 and, after receiving the normal response from the DataNode program 313 to which the stored data was transmitted, transmits the normal response to the DataNode program 313 that is the source of the received stored data. A DataNode program, which receives the stored data with Duplication count 412 of "1", does not transmit the stored data to another DataNode program 313 but transmits the normal response to the source DataNode program.

In step1010, the storage system transmits the storage response and terminates the processing.

In step 1011, the DataNode program 313 writes the received stored data into the volatile memory. In step 1012, if Data type 402 indicates the need to access the nonvolatile memory, the DataNode program 313 performs step 1114 in FIG. 11. If it does not, the DataNode program 313 transmits the storage response (step 1013). If in step 1014, State transition time 407 is set in the stored data and if the data is still present even after the state transition time (step 1015), the DataNode program 313 checks if the processing specified in Data type 402 is access to the nonvolatile memory (step 1016). More specifically, the DataNode program 313 checks if there is a need to copy data from the volatile memory to the nonvolatile memory, to delete data from the nonvolatile memory, and so on. If in step 1016, there is a need to access the nonvolatile memory, the DataNode program 313 performs step 1117; if in step 1016, there is no need to access the nonvolatile memory, the DataNode program 313 performs the processing according to Data type 402, for example, deletes data from the volatile memory, invalidates data (inhibits the mail gateway 106 from accessing the memory), and so on (step 1017), and terminates the processing. If in step 1014, the state transition time is not set or if in step 1015, the data has been deleted before the state transition time, the DataNode program 313 terminates the processing.

The following describes FIG. 11. In step 1114, the DataNode program 313 checks if Data type 402 specifies a writing device and, if so, selects the writing device (step 1115). The write device is, for example, a hard disk, SSD, NAS, or SAN.

In step 1116, the DataNode program 313 checks if "Copy to nonvolatile memory synchronously or asynchronously" is set in Data type 402. If "Copy to nonvolatile memory asynchronously" is set, step 1122 is performed; if "Copy to nonvolatile memory synchronously" is set, step 1117 is performed.

In step 1117, the DataNode program 313 checks if Processing time-limit 406 is specified for the stored data. If in step 1117, Processing time-limit 406 is not specified for the stored data, the DataNode program 313 writes the stored data into the nonvolatile memory immediately. If in step 1117, Processing time-limit 406 is specified for the stored data, the storing of data into the storage system 107 may be delayed until Processing time-limit 406. And so, the writing into the nonvolatile memory is delayed until Processing time-limit 406 or until the write condition for the nonvolatile memory is satisfied (step 1119) and, when the condition is satisfied, the stored data is written into the nonvolatile memory (step 1120). The write condition in step 1119 is a condition for increasing the processing efficiency of writing stored data into the nonvolatile memory. For example:
- The number of data waiting to be written into the nonvolatile memory maintained by the DataNode program 313 becomes equal to or larger than a predetermined value. If this condition is satisfied, the DataNode program 313 writes data, which is waiting to be written into the nonvolatile memory, all at a time.
- Some of the data waiting to be written into the nonvolatile memory maintained by the DataNode program 313 is very near Processing time-limit 406. If this condition is satisfied, the DataNode program 313 writes the data that is very near Processing time-limit 406, as well as the other data waiting to be written into the nonvolatile memory, all at a time.
- The DataNode program 313 writes data to increase the processing efficiency of writing into the nonvolatile memory in the whole DataNode program 313. This condition is determined by the DataNode program 313 based on the number of data waiting to be written into the nonvolatile memory and Processing time-limit 406 for each data as well as the processing other than copying data to the nonvolatile memory.

The steps described above allow the DataNode program 313 to write data into the nonvolatile memory more efficiently.

In step 1122, the DataNode program 313 delays writing into the nonvolatile memory until any other multiple write conditions are satisfied as in step 1119 or maximum processing wait time elapses and, when the conditions are satisfied, writes data into the nonvolatile memory (step 1123). In step 1122, the DataNode program 313 checks if "Specify nonvolatile memory, not volatile memory, as write destination" is set in Data type 402. If it is set, the DataNode program 313 deletes the data from the volatile memory (step 1125); if not, step 1126 is performed. In step 1126, the DataNode program 313 transmits the storage response to the mail gateway.

Next, a second embodiment will be described.

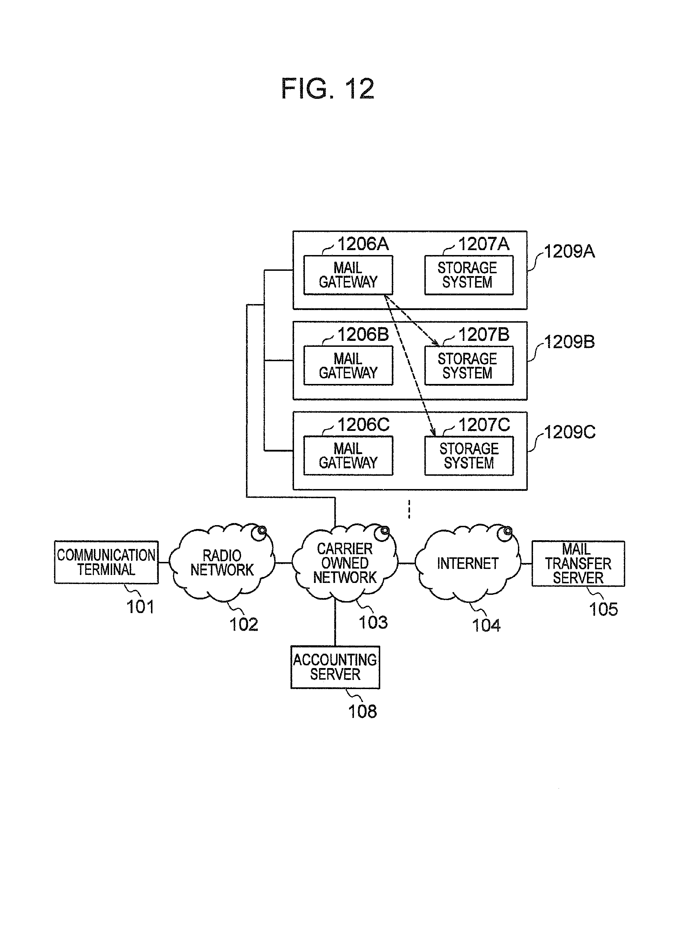

Unlike the first embodiment configured to make different servers to be the mail gateway 106 and the storage system 107, the second embodiment is configured to store the program of a mail gateway 106 and the program of a storage system 107 in the same server. The following describes the difference between the second embodiment and the first embodiment with reference to FIG. 12.

FIG. 12 is a diagram showing an example of the system configuration assumed in the second embodiment. The numerals 101-105 and 108 indicate the same elements as those in FIG. 1. The numeral 1209 indicates a server in which a mail gateway program 1206 and a storage system program 1207 are stored. A storage system program 1207B and a storage system program 1207C have a mail gateway program 1206A as the owner node, and the above three programs perform the copy processing. The processing of the mail gateway 106 and the storage system 107 is described on a server basis in the first embodiment; on the other hand, the processing of the mail gateway 1206 and the storage system 1207 is described, not on a server basis, but on a program basis, in the second embodiment.

In FIG. 2, the mail gateway 1206 comprises a mail gateway program 204, a volatile storage unit 205, and a nonvolatile storage unit 208.

In FIG. 3, the storage system 1207 comprises a storage system program 304, a volatile storage unit 305, and a nonvolatile storage unit 308.

Except for the difference described above, there is no change in the sequence and in the processing except that the mail gateway 106 is changed to the mail gateway 1206 and the storage system 107 is changed to storage system 1207.

Because of the difference in the configuration described above, the scaling-out and the operation are easier in the second embodiment than in the first embodiment. In the first embodiment, the ratio between the number of units of the mail gateway 106 and the number of unit of the storage system 107 depends on the server resources (processor, volatile memory, nonvolatile memory, network band, etc.) and so, when the mail system is scaled, the number of units of mail gateway 106 and storage system 107 must be determined by carefully considering the above condition. On the other hand, in the second embodiment where the mail gateway program 1206 and the storage system program 1207 are stored in one type of servers in parallel, there is no need to consider the difference in the server resources between the servers as in the first embodiment and, in addition, the operation is easier because there is only one type of servers.

Note that the first and second embodiments are applicable not only to the mail system but also to short messages and message services that use HTTP, PAP (Push Access Protocol), and other protocols.

Next, a third embodiment will be described.

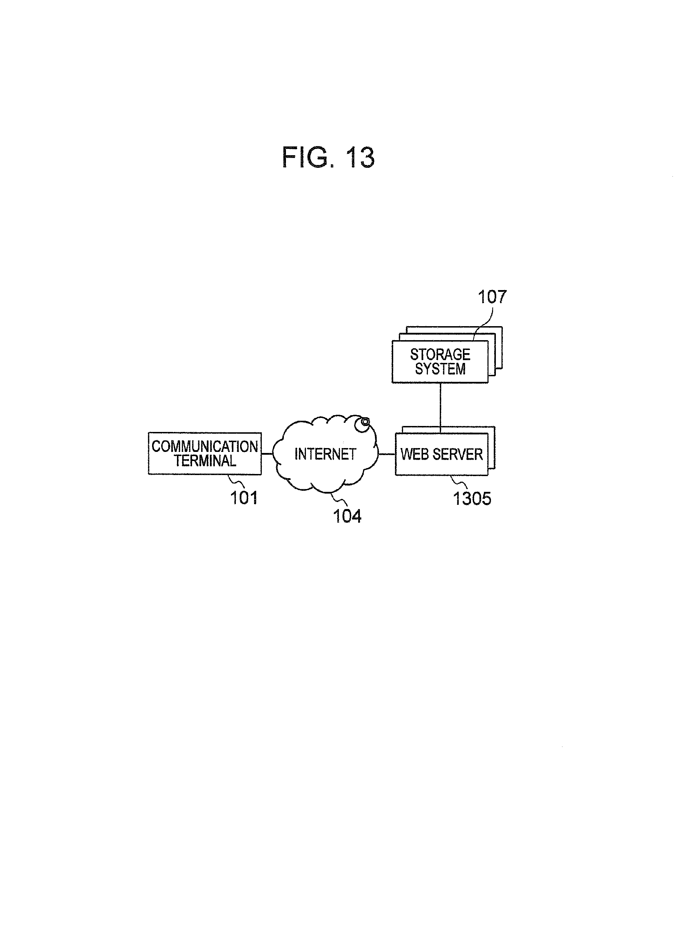

The third embodiment is an example in which a storage system 1307 is applied to a system other than the mail system. The following describes the difference between the third embodiment and the first embodiment with reference to FIG. 13.

FIG. 13 is a diagram showing an example of the system configuration assumed in the third embodiment. The numerals 101, 104, and 107 indicate the same elements as those in FIG. 1. The numeral 1305 indicates a web server that sells products to the communication terminal 101. The web server 1305, a server corresponding to the mail gateway 106 in the first embodiment, receives a communication request from the communication terminal 101 and stores data in the storage system 107. In this embodiment, the storage system 107 stores the information based on the user information on the communication terminal 101: for example, the storage system 107 stores the product search history of the user (communication terminal 101) and the accounting information on the user who purchases products in this embodiment.

When the communication terminal 101 searches for a product, the web server 1305 transmits a storage request, in which the volatile memory (not the nonvolatile memory) is specified as the storage destination of the search history, to the storage system 107.

When the communication terminal 101 purchases a product, the web server 1305 transmits a request to store the information on the accounting on the communication terminal 101 (hereinafter called accounting information) in the nonvolatile memory and the volatile memory, to the storage system 107.

When FIG. 2 is applied to this embodiment, the web server 1305 is implemented instead of the mail gateway 106 and the program that implements the web server 1305 is stored instead of the mail gateway program 204.

When FIG. 3 and FIG. 4 may be applied to this embodiment with no change from the first embodiment.

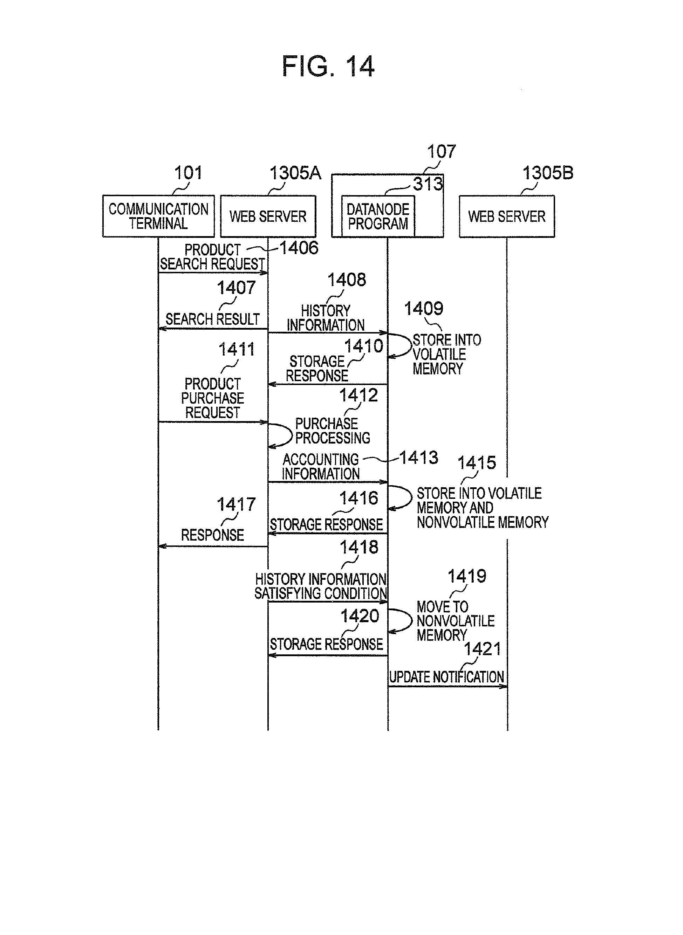

The sequences shown in FIG. 5, FIG. 6, and FIG. 7 are not used in this embodiment. Instead, FIG. 14 shows an example of the sequence from the search for a product to the purchase of the product performed by the communication terminal 101.

In FIG. 14, the communication terminal 101 first transmits a request to search for a product (hereinafter called a product search request) 1406 to a web server 1305A. The web server 1305A receives the product search request 1406 and returns a search result 1407. At the same time, the web server 1305A transmits history information 1408 to the DataNode program 313 of the storage system 107. In this case, "Write newly into volatile memory" and "Copy to nonvolatile memory after State transition time 470" are set in Data type 402 of the history information 1408. In addition, a key based on the identification information, which uniquely identifies the communication terminal 101, is set in Key 405 of the history information 1408.

Next, the DataNode program 313 stores the history information in the volatile memory according to Data type 402 of the received history information 1408 (step 1409) and transmits a storage response 1410 to the web server 1305A. Next, the communication terminal 101 transmits a request to purchase the product (hereinafter called a product purchase request) 1411 to the web server 1305A.

The web server 1305A receives the product purchase request 1411, performs the product purchase processing (step 1412), and transmits accounting information 1413 to the DataNode program 313. Because the accounting information 1413 is more important than the history information 1408, "Write newly into volatile memory and nonvolatile memory" is set in Data type 402 of the accounting information 1413.

The web server 1305A checks if the user of the communication terminal 101 is a priority customer and, if the user is a priority customer, stores the highest-priority value in Processing time-limit 406 of the accounting information 1413. Otherwise, the web server 1305A stores a value (default value) set for the normal processing.

The DataNode program 313 stores the accounting information 413 in the volatile memory and the nonvolatile memory according to Data type 402 of the received accounting information 1413 (step 1415) and transmits a storage response 1416 to the web server 1305A. After receiving the storage response 1416, the web server 1305A transmits a response 1417 which indicates that the product could be purchased normally, to the communication terminal 101.

Next, the web server 1305A extracts the history information 1408, which is determined to be associated with the purchase processing 1412, and transmits history information 1418 to the DataNode program 313. In Data type 402 of the history information 1418, "Move the data specified by the key to nonvolatile memory (not stored in volatile memory)" is set.

The DataNode program 313 copies the history information 1408 in the volatile memory, to the nonvolatile memory according to Data type 402 of the received history information 1418, deletes the history information from the volatile memory (step 1419), and transmits a storage response 1420 to the web server 1305A.

If an allowed client node is set in Client information 408 of the history information 1418 or in Allowed client node 328 of the queue data 321 in which the history information 1418 is stored, the DataNode program 313 transmits an update notification 1421 to a web server 1305B that is set as an allowed client node.

For FIG. 8, FIG. 9, FIG. 10, and FIG. 11, there is no change from the first embodiment and those figures are applicable to this embodiment.

As described above, the third embodiment allows the web server 1305, which stores user information in the storage system 107, to have fault tolerance (prevents important data from being lost), and share data with multiple web servers 1305.

The specification and drawings are, accordingly, to be regarded in an illustrative rather than a restrictive sense. It will, however, be evident that various modifications and changes may be made thereto without departing from the spirit and scope of the invention(s) as set forth in the claims.

## Claims

1. A mail system comprising:
a mail server (106) that receives a mail from a mail transmission device (101); and
a storage system (107) that stores the mail and/or related information on the mail (410) wherein
the mail server (106) comprises:
a function (512 and 523) to generate the related information on the mail;
a function to generate control information (411) on storage of the mail and/or the related information; and
a function (508, 513 and 524) to transmit the mail and/or the related information and the control information to the storage system (107), and
the storage system (107) comprises:
a nonvolatile memory (309) and a volatile memory (307) used for the storage;
a DataNode program (313) that determines a method for the storage of the mail and/or the related information based on the control information, and that stores the mail and/or the related information in the nonvolatile memory (309) and/or the volatile memory (307) according to the determined method for the storage.

2. The mail system according to claim 1 wherein
when one or more mail servers (106) are provided,
the storage system (107) comprises:
one or more queues (321); and
a SuperNode program (312) to make one of the queues (321) correspond to any of the mail servers (106),
the DataNode program (313) managing the stored mail and/or the related information (410) on a mail server basis.

3. The mail system according to claim 1 or 2 wherein
the DataNode program (313) of the storage system (107)
monitors the mail server (106) for a failure (906) and
if a failure is detected by the monitoring (907), notifies of the failure (908).

4. The mail system according to at least one of claims 1 to 3 wherein
the DataNode program (313) of the storage system (107)
manages a mail server, which can access data stored in the storage system (107), using identification information (328) that uniquely identifies the mail server and
when the mail and/or the related information corresponding to the identification information is updated, notifies the mail server (106) of the update information (712).

5. The mail system according to at least one of claims 1 to 4 wherein
the DataNode program (313) of the storage system (107)
monitors the state of writing into the nonvolatile memory (309) and
when receiving a storage request from the mail server (106), transmits a failure response to the mail server (1004) if the load of the storage system (107) is a predetermined value or higher (1002).

6. The mail system according to at least one of claims 1 to 5 wherein
the mail server (106) comprises:
a function to transmit identification information (405), which uniquely identifies the mail and/or the related information (410) to be stored, to the storage system (107); and
a function to request the storage system (107) to copy the mail and/or the related information to the nonvolatile memory (309), using the identification information when the storage system (107) stores the mail and/or the related information in the volatile memory (307),
the DataNode program (313) of the storage system (107) performing the requested processing according to the identification information.

7. The mail system according to at least one of claims 1 to 6 wherein
the mail server (106) comprises a function to generate a processing time-limit (406) of the storage of the mail and/or related information (410), said processing time-limit being included in the control information (411),
the DataNode program (313) of the storage system (107) performing, before the processing time-limit (406), storage processing of the data and other storage processing of the mail and/or the related information at a time (1120).

8. The mail system according to at least one of claims 1 to 7 wherein
the function of the mail server (106) to generate the related information generates control information (411) specifying whether to require the mail and/or the related information (410) to be written into both the nonvolatile memory (309) and the volatile memory (307), or into one of the nonvolatile memory (309) and the volatile memory (307) but not into the other, and
the DataNode program (313) of the storage system (107) stores the mail and/or the related information (514) according to the control information (411).

9. The mail system according to claim 8 wherein
the DataNode program (313) of the storage system (107)
references the control information (411) to determine (1116) whether to transmit a response after termination of writing into the nonvolatile memory (309), or without waiting for termination of writing into the nonvolatile memory (309), and
stores the mail and/or the related information according to the determination (1118,1120,1123).

10. The mail system according to claim 8 or 9 wherein
the mail server (106) comprises:
a function to generate control information (411) that sets so as to store the mail received from a communication terminal (101) in the volatile memory (307) but not in the nonvolatile memory (309), and to transmit the related information, which includes the control information (411), to the storage system (107);
a function (511) to transmit a normal response to the communication terminal (101) when a response (510), which indicates that the request has been stored normally, is received from the storage system (107); and
a function (508 and 528) to transmit the mail, for which a processing request is transmitted to the storage system (107) to set so as to store the mail in the volatile memory (307) but not in the nonvolatile memory (309), to a mail transfer server (105) and, when receiving a temporary error from the mail transfer server (105), to transmit a request to the storage system (107) to copy the mail stored in the volatile memory (307) to the nonvolatile memory (309), and
the DataNode program (313) of the storage system (107) comprises a function (529) stores or copies the data according to the processing request.

11. The mail system according to at least one of claims 8 to 10 wherein
the mail server (106) comprises a function to set a request that includes a state transition time (407) and an instruction to copy the mail and/or the related information (410) from the volatile memory (307) to the nonvolatile memory (309) when the mail and/or the related information (410) are in the volatile memory (307) of the storage system (107),
the DataNode program (313) of the storage system (107) performing processing (542) according to the request if the mail and/or the related information are present even after the state transition time (407) included in the request.

12. The mail system according to at least one of claims 8 to 11 wherein
the mail server (106) comprises:
a function to manage the mail, received from the mail transmission device (101), on a mail destination domain basis; and
a function (607) to check if a destination domain is a restricted domain and, according to the checking result, to set whether to store the mail in the nonvolatile memory (309) and the volatile memory (307), or in the volatile memory (307) but not in the nonvolatile memory (309).

13. A storage system (107) that receives a request to store data (400) and stores the data (400), the data (400) being mail and/or related information (410) on the mail, the storage system (107) comprising:
a nonvolatile memory (309) and a volatile memory (307) used for the storage; and a DataNode program (313), wherein
the DataNode program (313)
receives the mail and/or the related information and control information (411) on the storage of the mail and/or the related information,
determines a method for the storage of the mail and/or the related information based on the control information (411), and
stores the received mail and/or the related information in the nonvolatile memory (309) and/or the volatile memory (307) according to the determined method for the storage (1011, 1018, 1020, and 1023).

14. The storage system (107) according to claim 13 wherein
the control information (411) includes a setting (402) of whether to write the mail and/or the related information (410) into both the nonvolatile memory (309) and the volatile memory (307), or into one of the volatile memory (307) and the nonvolatile memory (309) but not into the other, and
the DataNode program (313) stores the mail and/or the related information according to the setting (1011, 1118, 1120, and 1123).

15. The storage system (107) according to claim 13 or 14 wherein
the control information (411) includes a processing time-limit (406) of the storage of the mail and/or the related information (410), and
the DataNode program (313) performs, before the processing time-limit (406), storage processing of the data (400) into the nonvolatile memory (309) and other storage processing of the mail and/or the related information data at a time (1120).
